# EUROPEAN PATENT APPLICATION

(11) **EP 4 488 354 A1**
(43) Date of publication of application: **08.01.2025**
(21) Application number: 23763125.4
(22) Date of filing: 13.01.2023
(51) Int. Cl.: C12G 3/04, A23L 2/00, A23L 2/02

(54) **BEVERAGE CONTAINING ERIOCITRIN AND JUICE**

(30) Priority: 01.03.2022 JP 2022030882
(71) Applicant: Suntory Holdings Limited, Osaka-shi, Osaka 530-8203 (JP)
(72) Inventor: SHIBA, Keisuke, Kawasaki-shi, Kanagawa 211-0067 (JP); USHIKU, Jun, Kawasaki-shi, Kanagawa 211-0067 (JP); SEIKI, Hiroshi, Kawasaki-shi, Kanagawa 211-0067 (JP)
(74) Representative: Vossius & Partner Patentanwälte Rechtsanwälte mbB
(86) International application number: PCT/JP2023/000789
(87) International publication number: WO 2023/166862

(57) **Abstract**

The present invention addresses the problem of providing a new technology for enhancing the richness of flavor of juice in a beverage containing a small amount of the juice. In the present invention, the amount of eriocitrin contained in a beverage containing a small amount of juice is within a specific range.

## Description

### TECHNICAL FIELD

The present invention relates to a beverage containing eriocitrin and fruit juice and a method related thereto.

### BACKGROUND ART

Since tastes specific to fruits can be enjoyed, alcoholic beverages such as *chuhais* containing fruit juices have been widely accepted by consumers. The fruit juice contents need to be reduced for various reasons such as cost and taste, and techniques for coping with problems caused thereby have also been developed.

Examples of techniques for improving the body or the thickness of the taste in the beverages containing fruit juices in small amounts include a packaged citrus-flavored carbonated alcoholic beverage containing malic acid and limonene at specified contents at a specified ratio (PTL 1) and a low-fruit juice-containing beverage containing borneol and decanal in specified amounts (PTL 2).

### CITATION LIST

### PATENT LITERATURE

PTL 1: Japanese Patent Laid-Open No. 2017-176107
PTL 2: Japanese Patent Laid-Open No. 2019-135990

### SUMMARY OF INVENTION

### TECHNICAL PROBLEM

A beverage having a low fruit juice content has insufficient thickness of taste resulting from fruit juice (hereinafter also described as the "thickness of the taste of fruit juice"). An object of the present invention is to provide a new technique for improving the thickness of the taste of fruit juice in a beverage having a low fruit juice content.

### SOLUTION TO PROBLEM

The present inventors have earnestly examined and consequently found that, by adjusting the eriocitrin content to a specified range in a beverage having a low fruit juice content, it is possible to improve the thickness of the taste of the fruit juice.

The present invention relates to, but not limited to, the following.
1. A beverage, having a fruit juice content of 0.1 to 11.0 w/w% in terms of percent fruit juice content, an eriocitrin content of 6 to 25 ppm, and an alcohol content of 15.0 v/v% or less.
2. The beverage according to item 1, wherein the fruit juice contains citrus fruit juice.
3. The beverage according to item 1 or 2, wherein the beverage has an alcohol content of 1.0 to 15.0 v/v%.
4. The beverage according to any one of items 1 to 3, containing carbon dioxide.
5. The beverage according to any one of items 1 to 4, containing frozen-ground-immersed liquor of fruit and/or vegetable.
6. A method for improving thickness of taste of fruit juice in a beverage having a fruit juice content of 0.1 to 11.0 w/w% in terms of percent fruit juice content and an alcohol content of 15.0 v/v% or less, the method including a step of mixing raw materials so that the beverage contains 6 to 25 ppm of eriocitrin.
7. The method according to item 6, wherein the step of mixing raw materials includes:
   a step of freezing one or more of fruits and/or vegetables to obtain a frozen product;
   a step of finely grinding the frozen product to obtain a finely ground frozen product;
   a step of immersing, in alcohol-containing liquid, the finely ground product as it is or as a paste after thawing to thereby obtain immersed liquor; and
   a step of mixing the immersed liquor with another raw material, and
   wherein the beverage contains the immersed liquor.

### ADVANTAGEOUS EFFECTS OF INVENTION

The present invention can improve the thickness of the taste of fruit juice in a beverage having a low fruit juice content.

The "thickness of the taste of the fruit juice" used for the beverage herein means drinking satisfaction resulting from the fruit juice felt while the beverage is drunk and the aftereffect of the taste of the fruit juice remaining in the mouth.

### DESCRIPTION OF EMBODIMENTS

The beverage of the present invention and a method related thereto will be described below.

Note that "ppm" as used herein means ppm by weight/volume (w/v), and this is synonymous with "mg/L" unless otherwise specified.

### (Fruit juice)

The fruit juice content of the beverage of the present invention is relatively low, and is 0.1 to 11.0 w/w%, preferably 0.1 to 9.0 w/w% or 1.0 to 9.0 w/w%, more preferably 0.1 to 4.0 w/w% or 1.0 to 4.0 w/w%, in terms of percent fruit juice content. If the amount of the fruit juice is low, it is possible to provide a beverage having a refreshing aftertaste. Such a beverage is advantageous in production cost. Such a beverage is also beneficial in that variation in the flavor of the fruit juice from one product to another is reduced to enable production with stable quality.

The fruit juice to be used in the present invention may be in any form of straight juice, which is juice squeezed from fruits and used as it is, or concentrated juice, which is obtained by concentrating the straight juice. Transparent fruit juice or cloudy fruit juice can also be used. Whole fruit juice, obtained by crushing whole fruits including the skins of fruits and removing only particularly coarse hard solid matter such as seeds therefrom, fruit puree, obtained by straining fruits, or fruit juice into which the pulp of dried fruits is crushed or that is extracted from the pulp can also be used.

Examples of fruit juices include, but are not limited to, juices from citrus fruits (e.g., orange, *Citrus unshiu,* grapefruit, lemon, lime, *Citrus junos, Citrus iyo, Citrus natsudaidai, Citrus sudachi, Citrus hassaku, Citrus reticulata* var *poonensis, Citrus depressa, Citrus sphaerocarpa*), pomes (*e.g.,* apple, Japanese pear), drupes (e.g., peach, Japanese apricot, apricot, Japanese plum, cherry), berries (e.g., grape, blackcurrant, blueberry), tropical and subtropical fruits (e.g., pineapple, guava, banana, mango, lychee), and fruity vegetables (e.g., strawberry, melon, watermelon). Preferable fruit juices are citrus fruit juices, and examples thereof are juices from orange, *Citrus unshiu,* grapefruit, lemon, lime, *Citrus junos, Citrus iyo, Citrus natsudaidai, Citrus sudachi, Citrus hassaku, Citrus reticulata* var *poonensis, Citrus depressa,* and *Citrus sphaerocarpa* juices. Examples of preferable citrus fruit juices are orange, lemon, grapefruit, and lime juices. These juices may be used alone or in combination of two or more.

In the present invention, the "percent fruit juice content" in a beverage shall be calculated according to the conversion expression mentioned below using the amount (g) of a fruit juice added to 100 ml of a sample. Further, calculation of concentration factor shall be made as per the JAS guidelines, with the proviso that the sugar refractometer index for a sugar, honey, or the like added to a fruit juice is excluded. Percent fruit juice content (w/w%) = <Amount of fruit juice added (g)> × <concentration factor>/100 mL/<density of beverage> × 100

### (Eriocitrin)

In the present invention, eriocitrin can improve the thickness of the taste of the fruit juice in the beverage having a low fruit juice content.

Eriocitrin is a compound having a structure in which a disaccharide (rutinose) is bound to eriodictyol, which is a flavanone.

The eriocitrin content of the beverage of the present invention is 6 to 25 ppm, preferably 8.0 to 20 ppm, and more preferably 8.5 to 15 ppm. Another preferable example of the eriocitrin content is 8.0 to 25 ppm or 8.5 to 25 ppm.

The eriocitrin content may be measured by any known method such as GC-MS, GC, or HPLC.

Typical analysis conditions for HPLC will be shown below.

### <HPLC analysis conditions>

A beverage as a sample is subjected to high performance liquid chromatography (HPLC) under the following conditions. The analysis conditions for HPLC are as follows.
Measuring apparatus: Prominence (SHIMADZU CORPORATION)
Detector: SPD-M20A (SHIMADZU CORPORATION)
Column: TSKgel ODS-80Ts QA 150 × 4.6 mm, particle size: 5 µm (Tosoh Corporation)
Column temperature: 40°C
Detection wavelength: 280 nm
Mobile phase:
   Solution A
      ultrapure water:acetonitrile:trifluoroacetic acid = 95:5:0.05
   Solution B
      ultrapure water:acetonitrile:trifluoroacetic acid = 5:95:0.05
Liquid feeding condition:

**[Table 1]**

| Time (minute) | Solution A (%) | Solution B (%) |
|---|---|---|
| 0 | 95 | 5 |
| 19 | 35 | 65 |
| 19.5 | 0 | 100 |
| 24.5 | 0 | 100 |
| 25 | 95 | 5 |
| 30 | 95 | 5 |

### Injection volume: 5 µL

### (Alcohol)

The beverage of the present invention may contain alcohol, or may not contain alcohol, and the alcohol content of the beverage is 15.0 v/v% or less, preferably 1.0 to 15.0 v/v%, more preferably 1.0 to 13.0 v/v%, and more preferably 1.0 to 10.0 v/v%. The term "alcohol" as described herein means ethanol unless otherwise specified.

The alcohol percentage of the beverage herein can be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

If the alcohol content is low, another analysis method such as gas chromatography may be used instead of the above-mentioned method.

If the beverage of the present invention contains alcohol, alcohol may be incorporated into the beverage of the present invention by any means. The beverage typically contains alcohol raw material, and thereby contains alcohol. Examples of the alcohol raw material include, but not particularly limited to, spirits (rum, vodka, gin, tequila, and the like), liqueurs, whiskey, brandy, and *shochu.* Furthermore, the alcohol raw material may be brewage. The alcohol raw material is preferably whiskey, brandy, or neutral spirits. These alcohol raw materials can be used alone or in combination of two or more.

If the present invention is an alcoholic beverage, namely a beverage containing alcohol, the type thereof is not particularly limited, but the alcoholic beverage is preferably *chuhai* (with reference to the present invention, *chuhai* means an alcoholic carbonated beverage in which distilled liquor is diluted with another beverage such as water, soft drink, or tea), a cocktail (with reference to the present invention, a cocktail means a beverage containing a spirit or liqueur, acidic fruit juice of citrus fruits or the like, a sweet component, and carbon dioxide as needed), a sour (with reference to the present invention, a sour means a beverage containing a spirit, acidic fruit juice of citrus fruits or the like, a sweet component, and carbon dioxide), or the like.

Also if the present invention is a non-alcoholic beverage, namely a beverage not containing alcohol, the type thereof is not particularly limited, and examples thereof are alcohol taste beverages, which have tastes similar to those of alcoholic beverages. As examples of the alcohol taste beverages, beer taste beverages, *chuhai* taste beverages, non-alcoholic cocktails, sour taste beverages, wine taste beverages, sake taste beverages, and the like are exemplified, but the alcohol taste beverages are not limited to these. When a *chuhai* taste beverage, a non-alcoholic cocktail, and a sour taste beverage are described as examples in more detail, these beverages refer to beverages that achieve the tastes like those of *chuhais,* cocktails, and sours as the models, respectively, while the beverages are non-alcoholic.

The non-alcoholic beverages of the present invention shall not exclude beverages containing alcohol in an amount that is so minute as to be undetectable. The alcohol content of the non-alcoholic beverage of the present invention is preferably 0.00 v/v%. In description for confirmation, "0.00 v/v%" also includes numerical values such as 0.001 v/v% to be rounded off to 0.00 v/v%

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by Tuchenhagen GmbH, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure is not particularly limited, and is preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, the air in the container in the gas volume measuring apparatus is removed (snift), followed by the shaking, and the carbon dioxide pressure is measured. The carbon dioxide pressure as used herein means carbon dioxide pressure at 20°C unless otherwise specified.

### (Frozen-ground-immersed liquor)

The beverage of the present invention may contain frozen-ground-immersed liquor of fruit and/or vegetable. The content thereof is, but not be limited to, 0.1 v/v% or more or 0.1 to 1 v/v%.

If a fruit or a vegetable such as a lemon containing eriocitrin is used as raw material for a frozen-ground-immersed liquor, the frozen-ground-immersed liquor can be a source of eriocitrin.

The frozen-ground-immersed liquor of fruit and/or vegetable means immersed liquor obtained by a method including a step of freezing one or more of fruits and/or vegetables to obtain a frozen product; a step of finely grinding the frozen product to obtain a finely ground frozen product; and a step of immersing, in alcohol-containing liquid, the finely ground product as it is or as a paste after thawing.

Examples of the fruit to be used for producing the frozen-ground-immersed liquor include, but not particularly limited to, citrus fruits (e.g., orange, *Citrus unshiu,* grapefruit, lemon, lime, *Citrus junos, Citrus iyo, Citrus natsudaidai, Citrus sudachi, Citrus hassaku, Citrus reticulata* var *poonensis, Citrus depressa, Citrus sphaerocarpa*), pomes (*e.g.,* apple, Japanese pear), drupes (*e.g*., peach, Japanese apricot, apricot, Japanese plum, cherry), berries (*e.g.,* grape, blackcurrant, blueberry), tropical and subtropical fruits (*e.g*., pineapple, guava, banana, mango, lychee), and fruity vegetables (*e.g*., strawberry, melon, watermelon). The fruit is preferably selected from citrus fruits, more preferably selected from the group consisting of orange, *Citrus unshiu,* grapefruit, lemon, lime, *Citrus junos, Citrus iyo, Citrus natsudaidai, Citrus sudachi, Citrus hassaku, Citrus reticulata* var *poonensis, Citrus depressa, Citrus sphaerocarpa,* and more preferably selected from the group consisting of orange, lemon, grapefruit, and lime. These fruits may be used alone or in combination of two or more.

Vegetables to be used for producing the frozen-ground-immersed liquor include pulses and edible plant seeds besides leaf and stalk vegetables, fruit vegetables (however excluding fruit vegetables treated as fruits in the market), flower vegetables, and root vegetables except special cases, and they include *shiso* (*Perilla frutescens var. crispa*), ginger, red pepper, herbs (for example, mint, lemongrass, coriander, Italian parsley, and rosemary), and *wasabi* (*Eutrema japonicum (Miq.) Kiudz*)*.* Examples of preferable vegetables are tomatoes, celery, carrots, parsley, spinach, watercress, green pepper, lettuce, cabbage, beet, gingers (ginger and ginger with leaves), *shisos* (*such as* green *shiso* (*Perilla frutescens (L.) Britton var. crispa (Thunb.) H.Deane form. viridis (Makino) Makino)* or red *shiso* (*P. frutescens var. crispa* f. *purpurea*)).

The frozen-ground-immersed liquor will be described below with reference to fruit as an example; however, the description is also applicable to a vegetable except special cases.

If a raw material is described as a "fruit" or a "vegetable" herein, the "fruit" or the "vegetable" refers to a raw whole fruit or a raw whole vegetable including juice and solid matter except special cases. This is distinguished from "fruit juice" or "vegetable juice". If the term "fruit juice" or "vegetable juice" is used, the term refers to juice of a fruit or a vegetable obtained by a step such as compression beforehand, and this does not include juice of a fruit and/or a vegetable contained in a final product prepared from the whole fruit and/or the whole vegetable as a raw material except special cases.

In the freeze step, the raw material fruit and/or the raw material vegetable is frozen and solidified. Neither the freezer nor the freeze method is limited, and any of air freezing, air blast freezing, contact freezing, brine freezing, and freezing using liquid nitrogen may be used. A preferable freeze method is freezing using liquid nitrogen. The temperature of liquid nitrogen is -196°C. The freeze temperature is preferably less than the brittle temperature of the raw material fruit or the raw material vegetable to be used. The "brittle temperature" as used herein means low temperature at which an object is embrittled (becomes fragile and easily broken) rapidly. The brittle temperature can be determined by applying a conventional method performed on polymers or the like.

As long as the fruit and the vegetable can be fed to a freezer, the sizes of the fruit and the vegetable to be subjected to the freeze step are not limited. However, it may be more suitable to cut the fruit or the vegetable into small pieces for freezing the fruit or the vegetable within as short a time as possible, and it may be more suitable not to cut the fruit or the vegetable into so many pieces for freezing the fruit or the vegetable with as little damage as possible and without exposing the fruit or the vegetable to air. The whole fruit and the whole vegetable including fruit skin and seed can be subjected to the freeze step, or the fruit and the vegetable from which non-edible portions and portions containing unpreferable components are removed can also be subjected to the freeze step. Such portions can also be removed after the freeze step. A frozen fruit or a frozen vegetable can be obtained through the freeze step.

In the finely grinding step, the frozen product is finely ground. Neither the grinder nor the grinding method to be used for this step is limited. It is preferable to finely grind the frozen product at low temperature so that the frozen product remains solidified, preferably under freeze conditions using liquid nitrogen. The temperature of liquid nitrogen is -196°C. The degree of the fine grinding is not particularly limited. The frozen product is finely ground until the obtained finely ground product has an average particle size of preferably about 1 to about 1000 µm, more preferably about 1 to about 200 µm, and more preferably about 1 to about 100 µm. The average particle size as used herein means the median size (the particle size corresponding to 50% on an oversize distribution curve, also referred to as the median diameter or the 50% particle size). The ground frozen fruit and/or vegetables can be obtained through the finely grinding step.

The obtained finely ground frozen product is then subjected to the immersion step. Specifically, the finely ground frozen product is immersed in alcohol-containing liquid. The finely ground frozen product may be subjected to the immersion step as it is or as a paste after thawing. As long as heating is not performed, the temperature for the immersion step is not particularly limited. The immersion period is not limited, either, and is typically about a half day to several months or about one to about three days, or may be several months.

The alcohol-containing liquid means liquid containing ethanol that can be drunk or used for producing food, and may contain water. The alcohol-containing liquid is typically a mixed liquid of ethanol and water, and encompasses the distilled liquor and brewage mentioned above. In this step, the alcohol-containing liquid is preferably distilled liquor including those exemplified above. The alcohol content of the alcohol-containing liquid to be used for this step is preferably about 15.0 to about 100.0 v/v% and preferably about 25.0 to about 60.0 v/v%.

The immersion ratio is not limited, either. Typically, about 1 to about 500 g, about 5 to about 300 g, or about 10 to about 200 g of the finely ground frozen product is immersed in 1 L of the alcohol-containing liquid.

Immersed liquor that is the frozen-ground-immersed liquor is obtained through the immersion step. The immersed liquor may be used as it is or after solid matter is removed by filtration.

In order to produce the beverage of the present invention, the frozen-ground-immersed liquor only has to be mixed with another raw material or other raw materials.

### (Other components)

As long as the effect of the present invention is not deteriorated, additives such as flavorings, vitamins, dyes, an antioxidant, a preservative, seasonings, extract, a pH adjustor, citric acid, and a quality stabilizer to be commonly blended into beverages can be blended into the beverage in the present invention in addition.

In an embodiment, the beverage of the present invention does not contain a high intensity sweetener. The beverage of the present invention in the embodiment can therefore have a natural taste. Not containing a high intensity sweetener shall not exclude containing the high intensity sweetener in a very minute amount. The beverage containing no high intensity sweetener specifically includes the case where the amount of the high intensity sweetener is around or below the detection limit in an analysis method such as HPLC, for example, less than 0.5 ppm.

The term "high intensity sweetener" as used herein means a natural sweetener and a synthesis sweetener having a stronger sweetness than sucrose (for example, a sweetener having sweetness that is several to several hundred times the sweetness of sucrose). Examples of such a high intensity sweetener include peptide sweeteners such as aspartame and alitame, etc.; glycoside sweeteners such as stevia sweeteners (including stevia extract, enzyme-treated stevia, in which glucose is added to stevia by enzyme treatment, and rebaudioside A, which is the most satisfactory in sweetness quality among the sweet components of stevia) and Glycyrrhiza extract, etc.; sucrose derivatives such as sucralose; and synthetic sweeteners such as acesulfame K and saccharin, etc.

### (Packaged beverage)

The beverage of the present invention can be provided in the form of a packaged beverage. The form of the container includes, but not limited to, metal containers such as cans, PET bottles, cartons, bottles, pouches, and the like. For example, a sterilized packaged product can be produced by a method involving filling a container with the beverage of the present invention, followed by heat sterilization such as retort sterilization or a method involving sterilizing the beverage and filling a container with the sterilized beverage.

### (Method)

In another aspect, the present invention is a method for producing a beverage having a fruit juice content of 0.1 to 11.0 w/w% in terms of percent fruit juice content and an alcohol content of 15.0 v/v% or less. The method includes a step of mixing raw materials so that the beverage contains 6 to 25 ppm of eriocitrin. The raw materials include eriocitrin or raw materials containing eriocitrin (fruit juice, flavorings, and the like) and other raw materials such as water. Other raw materials are obvious from the above-mentioned description for the beverage. Since this method can improve the thickness of the taste of the fruit juice in the beverage, in another aspect, the method is also a method for improving the thickness of the taste of the fruit juice in the beverage.

The methods for adjusting the eriocitrin content, the fruit juice content, the alcohol content, and the like of the beverage are obvious from the above-mentioned description for the beverage. Preferable ranges of the contents or the line of the above-mentioned components are as mentioned above with respect to the beverage. Furthermore, specific examples and the amounts of other additional components are also as mentioned above with respect to the beverage.

For example, if the beverage contains the frozen-ground-immersed liquor of fruit and/or vegetable, the step of mixing raw materials may include:
a step of freezing one or more of fruits and/or vegetables to obtain a frozen product;
a step of finely grinding the frozen product to obtain a finely ground frozen product;
a step of immersing, in alcohol-containing liquid, the finely ground product as it is or as a paste after thawing, to thereby obtain immersed liquor; and
a step of mixing the immersed liquor with another raw material.

### (Numerical range)

In the description for clarification, the numerical ranges as used herein include their end points, namely the lower limit values and the upper limit values. For example, the range represented by "1 to 2" includes 1 and 2.

### EXAMPLES

Although the present invention will be described based on Test Examples hereinafter, the present invention is not limited to these examples.

### (Test Example 1) Effect of eriocitrin in fruit juice-containing beverage

In beverages containing fruit juice at various contents, the influence of eriocitrin on the thickness of the taste of the fruit juice was examined.

Specifically, water, alcohol for raw material, and transparent lemon fruit juice (concentration factor: 7.0) were mixed, and carbon dioxide was dissolved to prepare multiple control beverages each having an eriocitrin content of 5 ppm or less. In this case, the total acid amounts of all the control beverages in terms of citric acid were adjusted to 0.57 g/100 ml using citric acid so that the difference in acidity did not influence the taste. Aliquots of the control beverages were then taken, and eriocitrin was dissolved therein at various concentrations to prepare sample beverages. The alcohol contents of all these beverages were 7 v/v%. The following table shows the fruit juice contents (expressed in terms of percent fruit juice content and shown merely as the "fruit juice (%)" in the table) and the eriocitrin contents of these beverages.

The obtained beverages were then sensorily evaluated by the following method.

Four special panelists drank the sample beverages, and evaluated the sample beverages for the degree of improvement in the thickness of the taste of the fruit juice (hereinafter occasionally described merely as "the thickness of the taste") as compared with the control beverages containing the fruit juice at the same contents as those in the sample beverages in accordance with the following criteria. The average values of the scores were calculated.

6: Improvement in the thickness of the taste is strongly felt; 5: improvement in the thickness of the taste is felt; 4: improvement in the thickness of the taste is slightly felt; 3: improvement in the thickness of the taste is not quite felt; 2: improvement in the thickness of the taste is scarcely felt; and 1: improvement in the thickness of the taste is not felt at all.

The sample beverages were evaluated according to the average values of the scores as follows.
+++: The average score is 5 points or more.
++: The average score is 4 points or more and less than 5 points.
+: The average score is 3 points or more and less than 4 points.
±: The average score is 2 points or more and less than 3 points.
-: The average score is 1 point or more and less than 2 points.

The panelists established a consensus on the relationship between the scores and the degrees of the improvements in thickness for reducing individual differences in the evaluations. The panelists then performed the evaluation tests. The following table shows the results.

**[Table 2]**

| | | Fruit juice (%) | | | | |
|---|---|---|---|---|---|---|
| | | 1 | 3 | 6 | 9 | 12 |
| Eriocitrin (ppm) | 5 or less | (Control) | | | | |
| | 6 | ++ | ++ | + | + | - |
| | 10 | +++ | +++ | ++ | + | - |
| | 15 | +++ | +++ | +++ | ++ | - |
| | 25 | +++ | +++ | +++ | ++ | ± |

With the fruit juice content and the eriocitrin content in specified ranges, satisfactory results were obtained.

### (Test Example 2) Influence of type of fruit juice

Control beverages and sample beverages were prepared in accordance with Test Example 1 except that cloudy lemon fruit juice (concentration factor: 8.2) was used instead of the transparent lemon fruit juice. The beverages had a fruit juice content of 3 w/w% (in terms of percent fruit juice content) and an alcohol content of 3 v/v%. The following table shows the eriocitrin contents of the beverages.

The obtained sample beverages were then sensorily evaluated in the same way as in Test Example 1. The following table shows the obtained results.

**[Table 3]**

| Eriocitrin (ppm) | Sensory result |
|---|---|
| 5 or less | - |
| 10 | ++ |

The same tendency as in Test Example 1 was seen.

## Claims

1. A beverage, having a fruit juice content of 0.1 to 11.0 w/w% in terms of percent fruit juice content, an eriocitrin content of 6 to 25 ppm, and an alcohol content of 15.0 v/v% or less.

2. The beverage according to claim 1, wherein the fruit juice comprises citrus fruit juice.

3. The beverage according to claim 1 or 2, wherein the beverage has an alcohol content of 1.0 to 15.0 v/v%.

4. The beverage according to any one of claims 1 to 3, comprising carbon dioxide.

5. The beverage according to any one of claims 1 to 4, comprising frozen-ground-immersed liquor of fruit and/or vegetable.

6. A method for improving thickness of taste of fruit juice in a beverage having a fruit juice content of 0.1 to 11.0 w/w% in terms of percent fruit juice content and an alcohol content of 15.0 v/v% or less, the method comprising a step of mixing raw materials so that the beverage comprises 6 to 25 ppm of eriocitrin.

7. The method according to claim 6, wherein the step of mixing raw materials comprises:
a step of freezing one or more of fruits and/or vegetables to obtain a frozen product;
a step of finely grinding the frozen product to obtain a finely ground frozen product;
a step of immersing, in alcohol-containing liquid, the finely ground product as it is or as a paste after thawing to thereby obtain immersed liquor; and
a step of mixing the immersed liquor with another raw material, and
wherein the beverage comprises the immersed liquor.
